Europäisches Patentamt

(19) European Patent Office

Office européen des brevets

(11) Numéro de publication: **0 093 057**
**A1**

(12) **DEMANDE DE BREVET EUROPEEN**

(21) Numéro de dépôt: **83400807.0**

(22) Date de dépôt: **22.04.83**

(51) Int. Cl.³: **G 01 S 15/52**

(30) Priorité: **23.04.82 FR 8207066**

(43) Date de publication de la demande:
**02.11.83 Bulletin 83/44**

(84) Etats contractants désignés:
**DE FR GB IT NL SE**

(71) Demandeur: **THOMSON-CSF**
**173, Boulevard Haussmann**
**F-75379 Paris Cedex 08(FR)**

(72) Inventeur: **Vernet, Jean-Louis**
**THOMSON-CSF SCPI 173, bld Haussmann**
**F-75379 Paris Cedex 08(FR)**

(72) Inventeur: **Bienvenu, Georges**
**THOMSON-CSF SCPI 173, bld Haussmann**
**F-75379 Paris Cedex 08(FR)**

(72) Inventeur: **Bayle, Philippe**
**THOMSON-CSF SCPI 173, bld Haussmann**
**F-75379 Paris Cedex 08(FR)**

(72) Inventeur: **Vernay, Gérard**
**THOMSON-CSF SCPI 173, bld Haussmann**
**F-75379 Paris Cedex 08(FR)**

(74) Mandataire: **Desperrier, Jean-Louis et al,**
**THOMSON-CSF SCPI 173, Bld Haussmann**
**F-75379 Paris Cedex 08(FR)**

(54) Dispositif de filtrage adaptatif de signaux reçus par un sonar actif pour la réjection de la réverbération.

(57) L'invention concerne les dispositifs de filtrage adaptatifs qui permettent la réjection des signaux de réverbération reçus par un sonar actif.

Les signaux de voie $B_i$ fournis par un tel sonar sont filtrés (421,422,441,442) en éliminant autour de la fréquence centrale du signal reçu sur la voie une bande dont la largeur est déterminée dans un circuit de calcul (45) qui tient compte de la vitesse, de l'assiette, de l'immersion, et de la distance au fond du véhicule porteur du sonar ainsi que des directivités en site et en azimut de chacune des voies et de la durée de l'impulsion. On peut ainsi réjecter les fréquences Doppler dues à la réverbération, notamment sur la surface et le fond, tout en conservant les fréquences Doppler dues à un but éventuel.

L'invention s'applique plus particulièrement aux torpilles autodirectrices et aux sonars remorqués.

./...

EP 0 093 057 A1

FIG. 3

1

# DISPOSITIF DE FILTRAGE ADAPTATIF DE SIGNAUX RECUS
# PAR UN SONAR ACTIF POUR LA REJECTION DE LA REVERBERATION

L'objet de la présente invention est un dispositif de filtrage adaptatif de signaux reçus par un sonar actif, monté sur un porteur mobile, pour la réjection des signaux de réverbération.

Il est connu qu'un appareil de type sonar sur un véhicule porteur en mouvement (bateau, sous-marin, torpille etc ...), détecte et localise d'autres véhicules ou des objets en insonifiant par ondes ultrasonores l'espace sous-marin environnant et en observant les échos reçus en direction et en distance. Il est également bien connu que l'énergie ultrasonore ainsi envoyée dans le milieu sous-marin est réverbérée par les particules, bulles et autres discontinuités présentes dans le milieu et aux frontières du milieu, c'est-à-dire la surface et le fond.

Cette réverbération gêne la réception des échos car elle tend à les masquer. Un moyen utilisé pour diminuer la réverbération est de former à la réception des voies angulaires très directives mais ce moyen est limité par les dimensions de l'antenne.

Le véhicule porteur étant en mouvement, la fréquence du signal émis renvoyé par une cible immobile est affectée du décalage par effet Doppler propre au porteur : c'est le cas pour la réverbération, où les hétérogénéités du milieu se comportent comme des cibles fixes. Lorsque le but est en mouvement, ce qui est le cas le plus fréquent, la fréquence du signal renvoyé par le but est affectée à la fois par l'effet Doppler propre dû au porteur et par celui dû au but. Il s'ensuit que la fréquence du signal correspondant à la réverbération et celle correspondant au but sont différentes. Il est connu d'utiliser cette différence des fréquences reçues pour séparer les signaux d'échos de la réverbération.

Ainsi on utilise dans les appareils électro-acoustiques de type sonar un filtre réjecteur de bande pour atténuer la réverbération. Ce filtre a en général une largeur de bande fixe et une fréquence centrale qui varie en fonction du déplacement en fréquence par effet Doppler dû au porteur, c'est-à-dire en fonction de la vitesse de ce porteur. Un dispositif de filtrage de ce type, appliqué à un sonar de torpille, est décrit dans le brevet américain 3.723.954.

Dans ce dispositif la largeur de bande du filtre réjecteur est calculée en fonction d'une vitesse moyenne. Or cette largeur varie avec la vitesse, la direction d'observation c'est-à-dire la direction de la voie et comme on le verra avec la largeur du lobe de directivité de cette voie.

Le dispositif de filtrage suivant l'invention a l'avantage, par rapport à cet art antérieur, d'optimiser le filtre réjecteur de réverbération en fonction de la vitesse du porteur, des propriétés de directivité du sonar et de la direction de la cible.

Pour un sonar de torpille le niveau moyen des lobes secondaires reste élevé et l'inclinaison en site varie à tout instant. Il en résulte que le niveau de réverbération reçu est dû pour la plus grande part aux réverbérations de frontières : fond et surtout surface.

On propose selon l'invention un dispositif de filtrage de chaque signal de voie permettant à différents instants de réception de calculer les fréquences extrêmes $f_{max}$ et $f_{min}$ pour éliminer au mieux le signal de réverbération dû à la surface et/ou au fond. Pour cela on fait intervenir les angles de gisement et de site dans le calcul de $f_{max}$ et $f_{min}$.

Deux modes de réalisation sont décrits, avec un certain nombre de variantes :

– un filtrage analogique ou numérique temporel de chaque signal de voie ;

– un filtrage par élimination de raies spectrales après analyse spectrale de chaque signal de voie.

Cette dernière réalisation est avantageuse dans le cas où le traitement des signaux de voies consiste à déterminer une direction acoustique pour la recherche ou la poursuite d'un but sans qu'il soit besoin de visualiser les signaux : c'est le cas en torpillerie.

On décrit également une variante simplifiée utile lorsque l'angle de site du porteur ne varie pas, c'est-à-dire lorsque le dispositif de filtrage est appliqué à un sonar de coque ou de sous-marin.

Selon l'invention un dispositif de filtrage adaptatif de signaux reçus par un sonar actif monté sur un véhicule porteur animé d'une vitesse v mesurée par un capteur de vitesse, comportant des circuits de formation de voies $B_i$ correspondant à des directions distinctes, des moyens

commandables pour filtrer chaque signal de voie et des moyens de calcul pour recevoir le signal de vitesse V et commander les moyens de filtrage afin d'éliminer dans les signaux de voie les fréquences Doppler dues à la vitesse du porteur, est principalement caractérisé en ce que ces moyens de calcul reçoivent également des signaux $S_i$ émis par les circuits de formation de voie pour désigner la voie filtrée, et que lesdits moyens de calcul permettent de déterminer les fréquences Doppler à éliminer en tenant compte en outre de l'orientation et de l'ouverture de la voie filtrée.

D'autres particularités et avantages de l'invention apparaitront clairement dans la description suivante présentée à titre d'exemple non limitatif et faite en regard des figures annexées qui représentent :

- les figures 1 et 2, l'espace marin insonifié par une torpille ;
- la figure 3, le schéma d'un sonar et de son dispositif de filtrage adaptatif selon l'invention ;
- la figure 4, le schéma d'une variante de réalisation du sonar de la figure 3 ;
- la figure 5, le graphique des spectres des signaux de voies, obtenus en sortie de l'organe 53 de la figure 4 ;
- la figure 6, l'enveloppe du spectre d'un signal de voie ;
- la figure 7, l'action d'un filtre en peigne sur le signal de la figure 6 ;
- la figure 8, le schéma d'une variante simplifiée du sonar de la figure 3 ;
- la figure 9, le schéma d'un mode de réalisation d'un sonar et de son dispositif de filtrage adaptatif utilisant un microprocesseur.

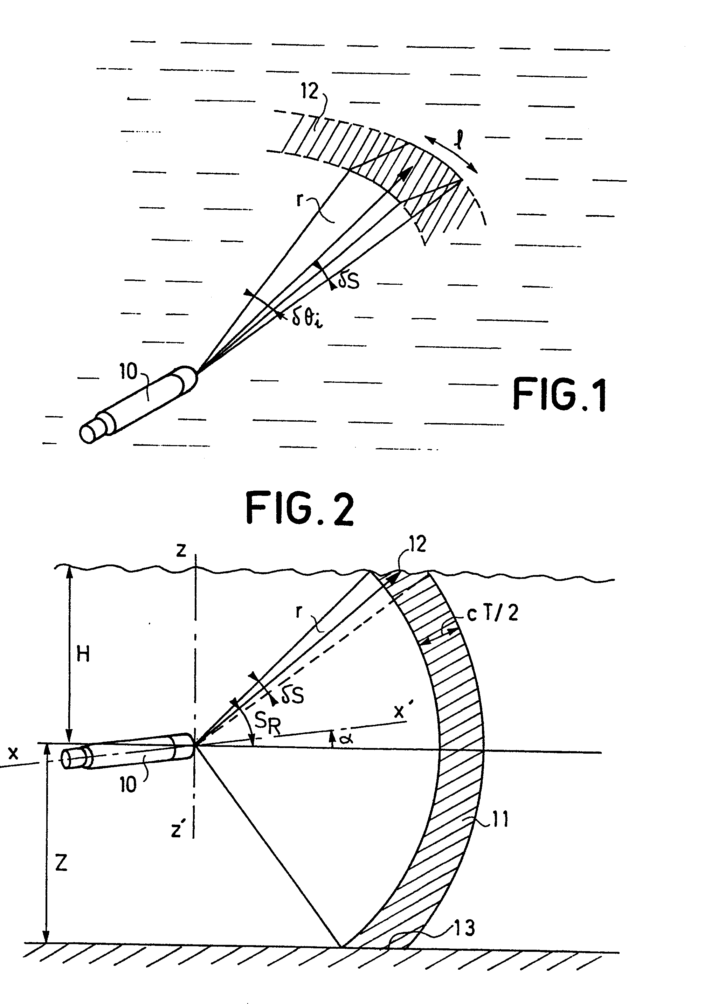

Les figures 1 et 2 représentent une torpille 10 évoluant sous la mer et le volume insonifié 11 correspondant à un instant t de réception pour une impulsion émise de durée T. A cet instant t de réception il correspond une distance r égale à $\dfrac{c(t-t_0)}{2}$, $t_0$ étant l'instant d'émission et c la vitesse du son. L'insonification de la surface et du fond de la mer s'effectue suivant deux superficies en forme de couronnes 12 et 13 autour de l'axe vertical zz' et de largeur proportionnelle à cT/2. Ces superficies définissent des aires réverbérantes.

En prenant par exemple le cas de la réverbération de surface, il correspond à cette aire un angle de site moyen $S_R$ qui est égal à arc sin $\dfrac{H}{r}$ (1) où H est l'immersion de la torpille. La largeur angulaire en site avec laquelle est reçue la réverbération de surface est $\delta S$.

Le spectre du signal parasite reçu dans une voie donnée du sonar à un instant t dépend :

– de la distance r ;

– de la durée d'impulsion T et de son spectre ;

– des directivités d'émission et de réception de la voie en gisement entre 0 et $2\pi$;

– des directivités d'émission et de réception de la voie en site pour S compris entre $S_R + \dfrac{\delta S}{2}$ et $S_R - \dfrac{\delta S}{2}$ ;

– de l'inclinaison $\alpha$ de porteur avec l'horizontale ;

– de l'index de réverbération de chaque partie élémentaire de l'aire réverbérante (cet index dépend, pour la surface, de l'état de la mer).

La connaissance de ce spectre à chaque instant permet d'obtenir pour un signal de voie donné les fréquences maximum et minimum entre lesquelles le niveau dépasse une valeur donnée. Ces fréquences constituent les fréquences de coupure $f_{min}$ et $f_{max}$ du filtre réjecteur permettant d'éliminer au mieux, à cet instant et pour cette voie, le signal parasite dû à la réverbération de surface.

Suivant le même principe, en considérant l'aire réverbérante interceptée sur le fond et en remplaçant l'immersion H par la distance au fond Z, on détermine les fréquences extrêmes du filtre réjecteur permettant d'éliminer au mieux le signal parasite dû à la réverbération du fond.

Dans un premier mode de réalisation, on calcule de manière approchée ces limites $f_{min}$ et $f_{max}$.

En première approximation on considère que la largeur de l'aire réverbérante en gisement 1 est limitée à la largeur angulaire de lobe principal $\delta\theta_i$ du produit des directivités émission-réception en gisement, largeur prise par exemple à 3dB d'atténuation du maximum. Toujours en première approximation on considère seulement les directions en site comprises dans le lobe principal du produit des directivités émission-réception en site, largeur prise également par exemple à 3dB d'atténuation du maximum. Pour les autres directions on considère que le niveau de réverbération reçu est peu élevé et qu'il n'y a pas lieu de l'éliminer.

En se reportant aux figures 1 et 2, à un instant donné le niveau de réverbération reçu provient de diffusions en surface (pour cet exemple) dont les directions sont comprises dans un secteur angulaire délimité par les angles au sommet $\delta\theta_i$ et $\delta S$. La direction correspondant à r est définie par le gisement $\theta_i$ de la voie considérée par rapport à l'axe xx' de la torpille et par le site $S_R - \alpha$ où $\alpha$ est l'inclinaison de l'axe xx' par rapport à l'horizontale. Avec cette approximation on considère que le signal réverbéré est produit par les diffuseurs dont les directions sont comprises en gisement entre $\theta_i - \dfrac{\delta\theta_i}{2}$ et $\theta_i + \dfrac{\delta\theta_i}{2}$, et en site $S_R - \alpha - \dfrac{\delta S}{2}$ et $S_R - \alpha + \dfrac{\delta S}{2}$.

Si v est la vitesse du porteur, $f_0$ la fréquence d'émission et c la vitesse du son dans l'eau, l'écart de fréquence $\Delta f$, dû à l'effet Doppler, est donné, dans la direction du mouvement de ce porteur, par :

$$\Delta f = 2\frac{v}{c}f_0 = K \quad (2)$$

Dans une direction quelconque définie par les angles $\theta$ et S, cet écart sera donné par :

$$\Delta f = K \cos\theta \cos S \quad (3)$$

Par conséquent les expressions donnant $f_{min}$ et $f_{max}$ seront :

$$f_{min} = f_0 + K \cos\left(\theta_i + \frac{\delta\theta_i}{2}\right) \cos\left(S_R - \alpha + \frac{\delta S}{2}\right)$$

$$f_{max} = f_0 + K \cos\left(\theta_i - \frac{\delta\theta_i}{2}\right) \cos\left(S_R - \alpha - \frac{\delta S}{2}\right) \quad (4)$$

où $S_R$ est donné par (1) et $\delta S$ par :

$$\delta S = \text{tg } S_R \times \frac{cT}{2r} \quad (5)$$

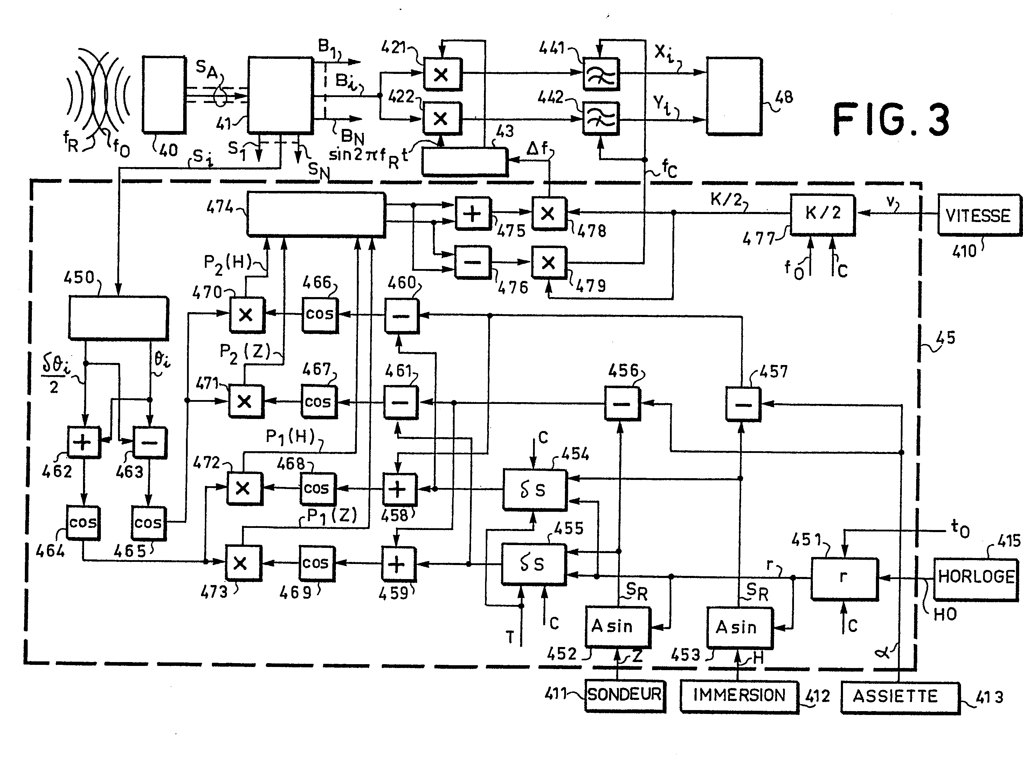

Le mode de réalisation utilisant ces expressions (4) est représenté sur la figure 3.

Une antenne 40 émet des impulsions à la fréquence $f_0$ et reçoit des impulsions à la fréquence $f_R$ affectée de l'effet Doppler avec $f_R = f_0 + \Delta f$. De manière connue, les signaux $S_A$ fournis par l'antenne de réception sont appliqués à des circuits de formation de voies 41 dans lesquels ces signaux sont retardés et additionnés pour former des voies angulaires dans plusieurs directions.

Chaque signal de voie tel que $B_i$ est démodulé de manière synchrone autour d'une fréquence $f_R = f_0 + \Delta f$ par multiplication par deux signaux en quadrature $\cos(2\pi f_R t)$ et $\sin(2\pi f_R t)$. La fréquence $f_R$ est fournie aux deux multiplieurs 421 et 422 par un oscillateur local 43, qui est par exemple à commande par tension appelé V.C.O. dans la littérature anglo-américaine (voltage controlled oscillator). Cet oscillateur 43 reçoit la valeur $\Delta f$ pour commander la variation de fréquence. Les deux composantes du signal démodulé sont filtrées dans deux filtres passe-haut identiques 441 et 442, dont la fréquence de coupure $f_c$ est, selon l'invention, fonction de la direction et de la largeur de la voie.

En prenant comme paramètres :

$$P_1 = \cos(\theta_i + \frac{\delta\theta_i}{2}) \cos(S_R - \alpha + \frac{\delta S}{2}) \qquad (6)$$

$$P_2 = \cos(\theta_i - \frac{\delta\theta_i}{2}) \cos(S_R - \alpha - \frac{\delta S}{2})$$

On obtient à partir des équations (4) :

$$\Delta f = \frac{K}{2}(P_1 + P_2)$$

$$f_c = \frac{K}{2}(P_1 - P_2) \qquad (7)$$

Les valeurs de $\Delta f$ et $f_c$ sont fournies par un ensemble de circuits de calcul 45 qui reçoit :

– la vitesse v, la distance au fond Z, l'immersion H et l'assiette $\alpha$ fournies par des appareils de mesure appropriés 410, 411, 412, 413 installés sur la torpille ;

– un signal HO délivré par une horloge 415 pour obtenir la mesure du temps t qui s'écoule à partir de l'instant $t_0$ d'émission de chaque impulsion du sonar ;

– les valeurs des autres paramètres nécessaires au calcul de $\Delta f$ et $f_c$ : la durée d'impulsion T, la fréquence d'émission $f_0$ et la vitesse du son dans l'eau c.

Chaque signal de voie $B_i$ est repéré par un signal numérique $S_i$ qui fournit les adresses des valeurs de $\theta_i$ et $\frac{\delta\theta}{2}$ contenues dans une mémoire 450.

Un circuit 451 permet de calculer à partir des signaux HO, $t_0$ et c la valeur de r selon la formule $r = \frac{c(t - t_0)}{2}$.

Deux circuits 452 et 453 identiques permettent de calculer à partir de cette valeur de r et des signaux Z et H deux valeurs de l'angle $S_R$, correspondant respectivement à la réflexion sur le fond et sur la surface, selon la formule (1). En effet on ne peut choisir entre la réflexion sur la surface et celle sur le fond qu'après avoir fait les deux calculs.

Deux circuits 454 et 455 identiques permettent de calculer pour ces deux valeurs de SR, et à partir des valeurs de r, de T et de c, les deux valeurs correspondantes de $\delta S$, selon la formule (5).

Deux soustracteurs 456 et 457 permettent d'enlever aux deux valeurs de $S_R$ la valeur de l'angle $\alpha$.

Deux additionneurs 458 et 459 permettent pour les deux valeurs de $S_R$ d'additionner les deux valeurs correspondantes de $\delta S$ aux valeurs de $S_R - \alpha$ obtenues en sortie des soustracteurs 456 et 457.

De même deux soustracteurs 460 et 461 permettent de soustraire les valeurs de $\delta S$ aux valeurs de $S_R - \alpha$.

La valeur de $\frac{\delta\theta_i}{2}$ lue dans la mémoire 450 est respectivement ajoutée dans un additionneur 462, et retranchée dans un soustracteur 463, à la valeur de $\theta_i$ lue dans cette même mémoire.

Six circuits 464 à 469 permettent de calculer les cosinus des angles obtenus en sortie des circuits 459 à 463.

Les cosinus des angles de site sont multipliés avec les cosinus des angles de gisement dans quatre multiplicateurs 470 à 473, pour obtenir les valeurs des paramètres $P_1$ et $P_2$ correspondant à l'immersion H et à la distance au fond Z, en appliquant les expressions (6).

Ces valeurs sont comparées entre elles dans un circuit de comparaison 474 de manière à choisir les valeurs de $P_1$ et $P_2$ qui donnent la meilleure réjection :

- si $P_1$ (Z) > $P_1$ (H) et $P_2$ (Z) < $P_2$ (H), le circuit fournit $P_1$ (H) et $P_2$ (H), et inversement ;

- si $P_1$ (Z) < $P_1$ (H) et $P_2$ (Z) < $P_2$(H), le circuit fournit $P_1$ (Z) et $P_2$ (H), et inversement.

Un additionneur 475 et un soustracteur 476 permettent d'obtenir, à partir de ces valeurs sélectionnées de $P_1$ et $P_2$, ($P_1 + P_2$) et ($P_1 - P_2$).

La valeur du paramètre $\frac{K}{2}$ est obtenue, en appliquant la formule (2), à l'aide d'un circuit 477 qui reçoit les valeurs de V, $f_0$ et c.

Deux multiplicateurs 478 et 479 permettent alors à partir de $\frac{K}{2}$, de $(P_1 + P_2)$ et de $(P_1-P_2)$ d'obtenir $\Delta f$ et $f_c$ en appliquant les formules (7).

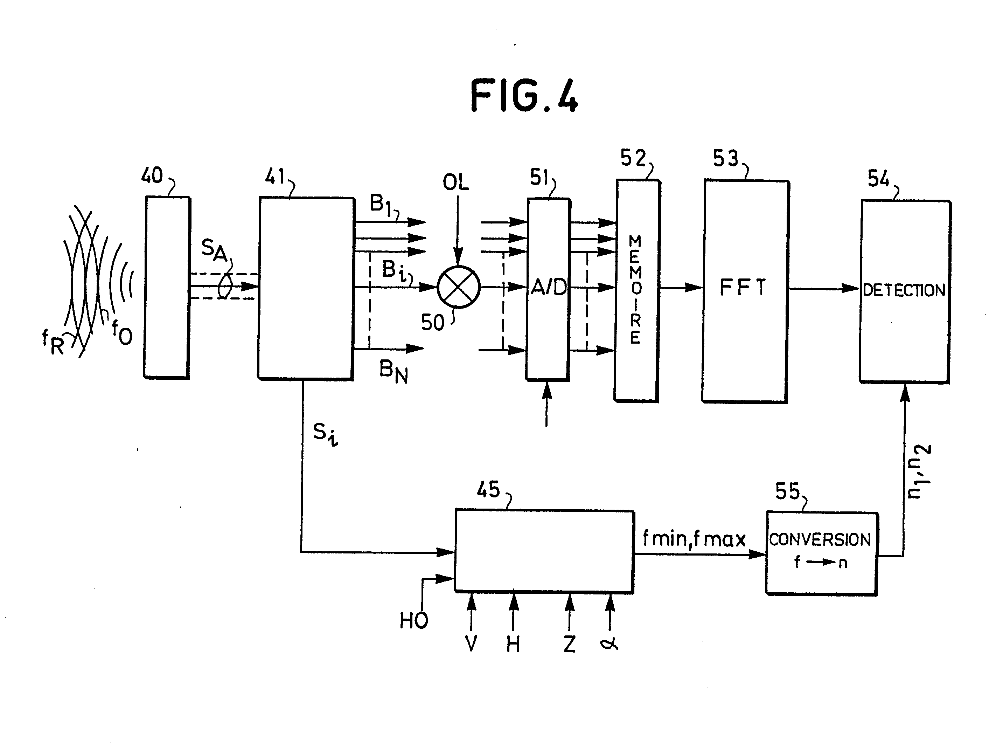

Dans une variante de réalisation représentée en figure 4, le filtrage est obtenu après analyse spectrale du signal de voie par l'élimination des raies spectrales dont les numéros correspondent à la bande coupée. Pour cela on convertit les valeurs de $f_{max}$ et $f_{min}$ en numéros de raies spectrales qui encadrent la partie du spectre à éliminer.

Les voies $B_i$, et le signal numérique qui les repère sont obtenus comme précédemment.

* On effectue ensuite un changement de fréquence de chaque signal de voie par battement dans un multiplicateur 50 avec une fréquence locale OL. Cette technique permet, en abaissant la fréquence porteuse, d'abaisser la fréquence d'échantillonnage $F_{ech}$ nécessaire et donc de diminuer le nombre de points de l'analyse spectrale qui sera effectuée selon la technique dite FFT. Après conversion analogique–digitale dans un convertisseur 51 à la cadence $F_{ech}$, les signaux de voie sont stockés dans une mémoire 52 de manière à être traités successivement par analyse spectrale voie après voie. L'analyse spectrale est effectuée dans un analyseur FFT 53 sur une durée égale ou proche de la durée d'impulsion T.

Les circuits de calcul 45 sont semblables à ceux de la figure 3, sauf que en sortie du comparateur 474 les deux valeurs de $P_1$ et $P_2$ sont multipliées par K et additionnées à $f_0$ pour obtenir les valeurs de $f_{min}$ et $f_{max}$.

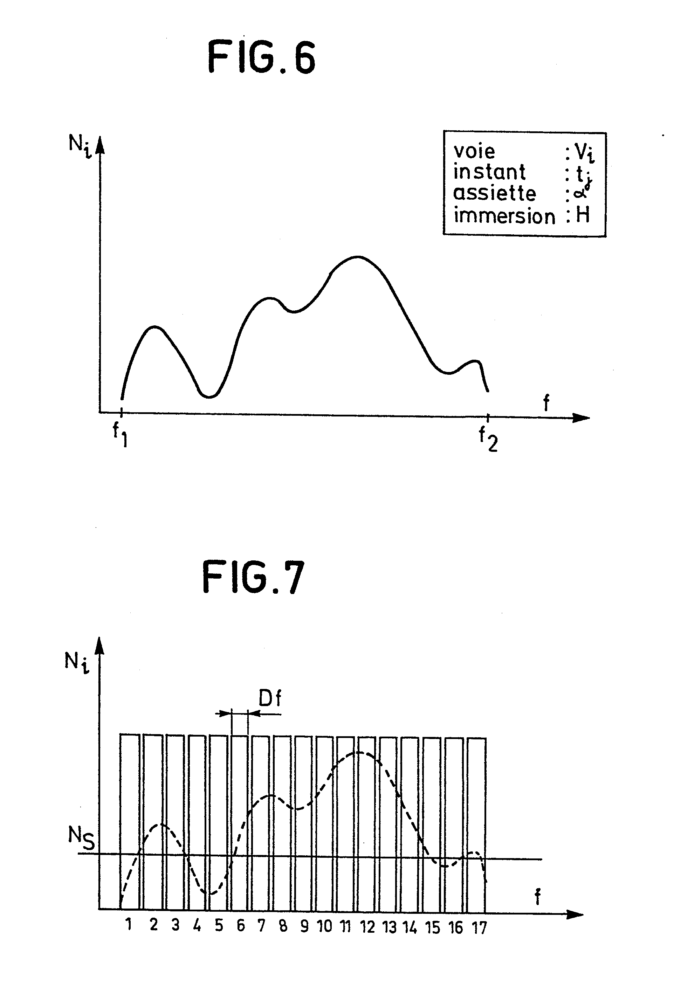

L'analyseur de spectre 53 fournit séquentiellement les spectres instantanés de toutes les voies $B_1$ à $B_N$ comme représenté schématiquement sur la figure 5 à l'instant $t_j$. La bande d'analyse correspond aux décalages Doppler maxima des buts que l'on estime à priori.

Les circuits 45 fournissent les valeurs $f_{min}$ et $f_{max}$. Ces valeurs permettent d'obtenir par lecture dans une table contenue dans une mémoire 55 les numéros $n_1$ et $n_2$ des raies spectrales extrêmes entre lesquelles les raies ne doivent pas être prises en compte. Ces numéros sont fournis au dispositif de détection 54 qui détecte si les raies spectrales restantes dépassent un certain seuil.

Ainsi, comme représenté sur la figure 5, les raies spectrales comprises entre $n_1$ et $n_2$ sont éliminées, ce qui supprime une fausse détection puisque ces raies dépassent le seuil S. Par contre on détecte bien un but dans les voies $B_1$ et $B_2$, mais pas dans la voie $B_N$.

Dans un mode de réalisation plus élaboré, on tient compte du niveau de toutes les raies spectrales.

Etant donné un diffuseur de direction $\theta$,S par rapport à la direction du porteur xx', la fréquence $f_i$ du signal réverbéré reçu par le porteur est $f_i = f_0 + K \cos \theta \cos S$. A cette fréquence correspond un niveau spectral $N_i$ qui peut être calculé pour chaque voie en fonction des paramètres suivants :

– l'instant $t_j$ ou la distance r ;

– l'assiette $\alpha$;

– l'immersion H ;

– la distance au fond Z .

Pour cela on tient compte des atténuations dues aux fonctions de directivité en gisement et en site, à l'émission et à la réception, de la voie $V_i$ considérée. A chaque valeur de $(\theta,S)$ correspond un niveau spectral $N_i$ et le spectre est obtenu en calculant les niveaux $N_i$ pour l'ensemble des directions $\theta$,S qui correspondent à l'aire réverbérante, c'est-à-dire telles que $0 \leqslant \theta < 2\pi$ et $S_R \dfrac{\delta S}{2} \leqslant S \leqslant S_R + \dfrac{\delta S}{2}$

Les surfaces 12 et 13 sont décomposées en parties élémentaires pour fournir le pas de calcul en $\theta$ et en S. Entre les spectres pris à des instants différents, on introduit l'atténuation due à la distance r. Lorsque la distance est assez grande on tient compte de la courbure des rayons sonores pour quelques profils de vitesse typiques.

On obtient une collection de spectres tels que par exemple celui dont l'enveloppe est indiquée sur la figure 6. Les fréquences extrêmes pour une vitesse v du porteur sont $f_1 = f_0 - K$ et $f_2 = f_0 + K$.

L'intensité du signal de réverbération est proportionnelle à $\displaystyle\int_{f_1}^{f_2} N_i\, df$. En rejectant sans discrimination toute la bande de $f_1$ à $f_2$ on risque de masquer le but, surtout si celui-ci correspond à un effet Doppler faible. Selon l'invention on établit alors une réjection sélective d'après la forme de spectre, qui ne prend en compte que les niveaux supérieurs à une valeur donnée $N_S$. Pour cela on considère une batterie de filtres passe-bande jointifs numérotés, de largeur constante Df, comme représenté sur la figure 7, et on détermine les numéros des filtres dans lesquels le niveau est inférieur à $N_S$ : par exemple les filtres 1, 4, 5, 16. Cette opération est effectuée pour toute la collection de spectres calculés comme indiqué précédemment. Pour chaque voie $V_i$ on dispose ainsi d'une série de numéros de filtres en fonction de v, H, Z, α et $t_j$.

L'analyse spectrale FFT utilisée dans la variante du premier mode de réalisation est équivalente à chaque instant à l'action d'une batterie de filtres passe-bande jointifs de largeur constante Df sensiblement égale à l'inverse de la durée du signal analysé.

Le schéma de ce deuxième mode de réalisation est celui de la figure 4 dans lequel le calculateur 45 et le circuit 55 sont remplacés par une d'une mémoire adressable contenant une table de valeur. Cette table contient les numéros des raies spectrales à éliminer, qui ont été déterminées préalablement par calcul pour chaque raie et pour différentes valeurs des paramètres de mesure v, H, Z, α et $t_j$, et à partir des fonctions de directivité considérées entre 0 et 2π pour le gisement θ et entre $-\frac{\pi}{2}$ et $\frac{\pi}{2}$ pour le site S.

D'après le numéro de la voie $S_i$ et les valeurs des paramètres de mesure, la table est adressée pour sortir les numéros des raies à éliminer dans les spectres qui sont fournis au dispositif de détection 54.

Une variante simplifiée de l'invention, décrite pour le premier mode de réalisation, consiste à ne pas tenir compte de l'angle de site S en faisant cos S = 1. Cette condition suppose que les angles S entre dans les diffuseurs considérés et la direction du porteur restent faibles en valeur absolue et vis à vis de l'angle de gisement puisque le sinus ne varie rapidement que pour des valeurs d'angles stables.

Pour satisfaire cette condition il faut :

– que l'angle de site de chaque voie soit faible ;

– que la largeur angulaire en site de chaque voie soit faible ;

- que le volume réverbérant soit strictement limité au lobe principal de directivité de chaque voie ;

- que l'angle de site du porteur ne varie pas.

Pratiquement ces conditions sont à peu près satisfaites lorsque le dispositif de filtrage est appliqué à un sonar de coque de bâtiment de surface ou de sous-marin.

Dans ces conditions la fréquence centrale dans la direction $\theta_i$, et la bande $\delta f$ correspondant à la largeur angulaire $\delta\theta_i$ sont données par :

$$f = f_0 + K \cos\theta_i \qquad (8)$$

$$\delta f = 2K \sin\left(\frac{\delta\theta_i}{2}\right) \sin\theta_i \qquad (9)$$

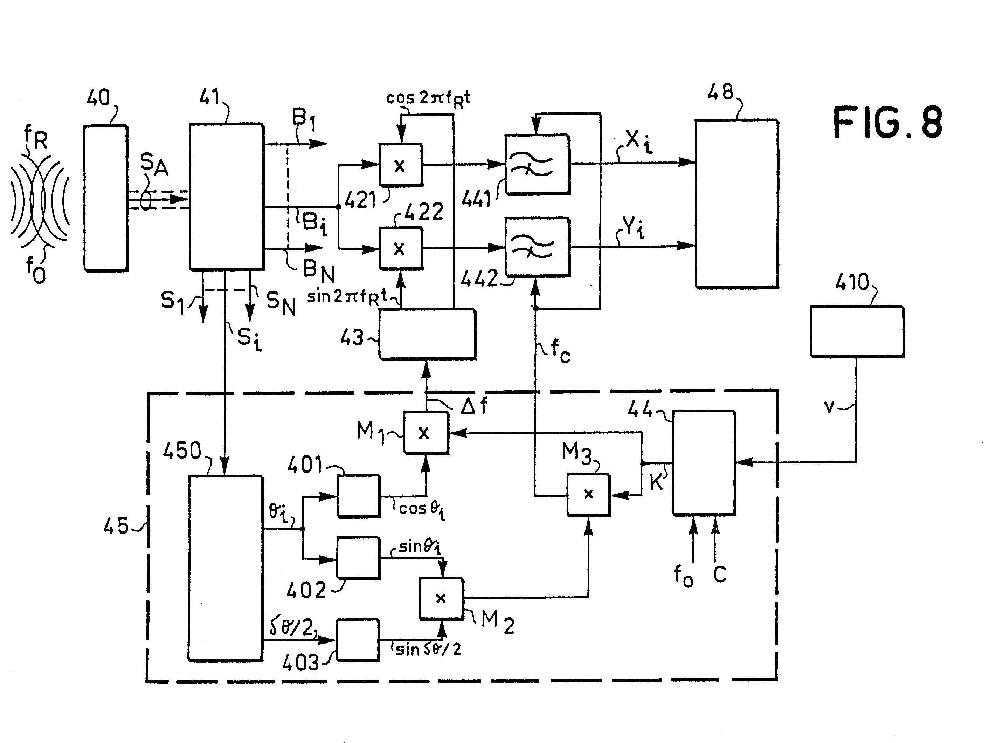

Le schéma de cette variante, représenté en figure 8, est semblable à celui de la figure 3 dans laquelle les circuits de calcul 45 ont été simplifiés.

Ces circuits 45 ne reçoivent qu'un signal v de vitesse et le signal $S_i$.

Ce signal $S_i$ fournit les adresses des valeurs de $\theta_i$ et de $\frac{\delta\theta}{2}$ dans une mémoire 450. La valeur de la vitesse v est fournie par un dispositif de mesure 410 et appliquée à un circuit de calcul 44, qui reçoit par ailleurs la valeur de la fréquence émise $f_0$ et de la vitesse des ondes acoustiques dans l'eau c. Le circuit 44 fournit à sa sortie la valeur de K, suivant la relation (2). Les valeurs de $\theta_i$ et $\frac{\delta\theta_i}{2}$ lues dans la mémoire 450 sont appliquées à des circuits de calcul 401, 402 et 403, qui donnent à leurs sorties respectivement les valeurs $\cos\theta_i$, $\sin\theta_i$ et $\sin\left(\frac{\delta\theta_i}{2}\right)$. Un circuit multiplieur $M_1$ recevant les valeurs de $\cos\theta_{4i}$ et de K fournit la valeur de $\Delta f$ appliquée à l'oscillateur commandable 43. Un second circuit multiplieur recevant les valeurs de $\sin\theta_i$ et $\sin\frac{\delta\theta_i}{2}$ fournit le produit de ces deux valeurs. Ce produit est appliqué à un troisième circuit multiplieur $M_3$ qui reçoit la valeur de K et fournit la valeur de $f_c = \frac{f}{2}$ suivant la relation (9). Cette valeur $f_c$ est appliquée aux filtres passe-haut commandables 441 et 442 fixant la fréquence de coupure à la valeur $f_c$. Ce sont ces filtres qui reçoivent les signaux démodulés par les multiplieurs 421 et 422, et les signaux filtrés $X_i$ et $Y_i$, appelés composantes complexes, sont appliqués au dispositif d'exploitation sonar 48.

L'ensemble 45 peut être un calculateur numérique du type microprocesseur.

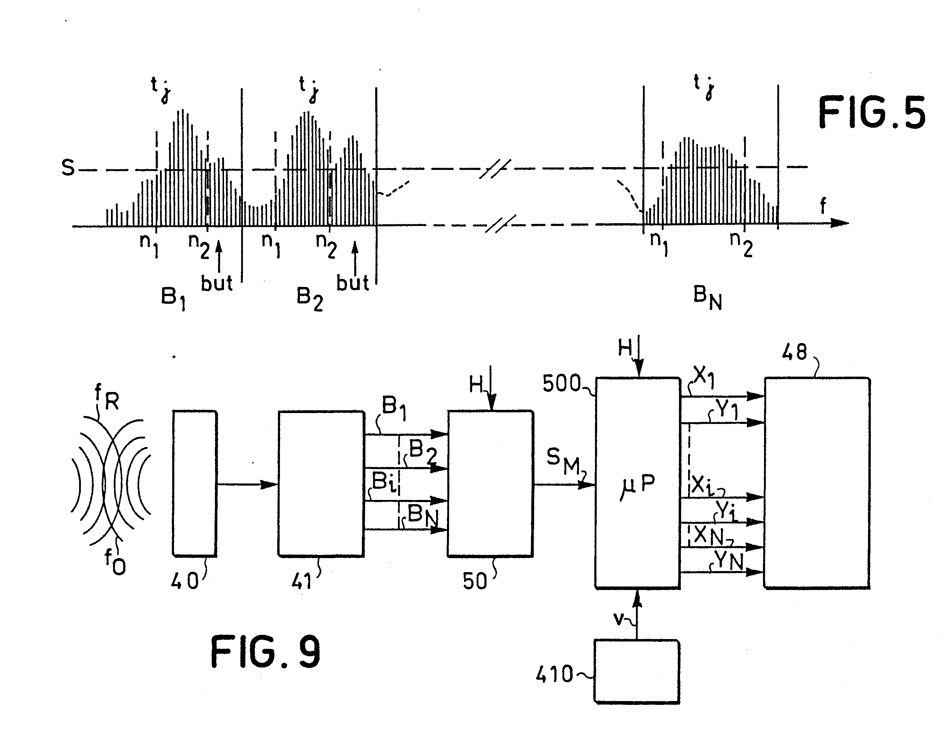

La figure 9 montre un exemple de réalisation d'un dispositif de filtrage comprenant un microprocesseur 500. Pour cette réalisation les N signaux de voies $B_1$, $B_2$, ..., $B_i$ ... $B_N$ sont appliqués à un multiplexeur 50, qui fournit le signal multiplexé et numérisé $S_M$ au rythme d'une horloge H. Le signal multiplexé $S_M$ est traité par le microprocesseur 500, qui reçoit les signaux d'horloge H et le signal de vitesse du porteur v. A partir de cette valeur de v, le microprocesseur calcule pour chaque voie la fréquence centrale $f_R$ et la fréquence de coupure $f_c$ pour chaque voie. Le microprocesseur trie les échantillons du signal $S_M$ puis exécute la démodulation synchrone et le filtrage par un programme de filtrage numérique.

Finalement le microprocesseur 500 fournit les composantes complexes des voies telles que $X_i$ et $Y_i$ appliquées au dispositif d'exploitation.

Une telle utilisation d'un calculateur pour réaliser les différentes fonctions de filtrage du sonar peut s'appliquer aux autres modes de réalisations et à leurs variantes.

R E V E N D I C A T I O N S

1. Dispositif de filtrage adaptatif de signaux reçus par un sonar actif monté sur un véhicule porteur animé d'une vitesse v mesurée par un capteur de vitesse (410), comportant des circuits de formation (41) de voies $B_i$ correspondant à des directions distinctes, des moyens commandables (43, 421, 422, 441, 442) pour filtrer chaque signal de voie et des moyens de calcul (45) pour recevoir le signal de vitesse v et commander les moyens de filtrage afin d'éliminer dans les signaux de voie les fréquences Doppler dues à la vitesse du porteur, caractérisé en ce que ces moyens de calcul (45) reçoivent également des signaux $S_i$ émis par les circuits de formation de voie (41) pour désigner la voie filtrée, et que lesdits moyens de calcul permettent de déterminer les fréquences Doppler à éliminer en tenant compte en outre de l'orientation et de l'ouverture de la voie filtrée.

2. Dispositif selon la revendication 1, caractérisé en ce que le porteur comprend en outre un sondeur (411) pour mesurer la distance au fond Z, un capteur (412) pour mesurer l'immersion H et un capteur (413) pour mesurer son assiette α, et que les moyens de calcul (45) permettent de déterminer les fréquences Doppler à éliminer en tenant compte en outre de la réverbération des impulsions du sonar sur la surface ou sur le fond, qui est calculée à partir des mesures de v, Z, H et α, ainsi que de la durée T de l'impulsion et du temps écoulé depuis l'instant $t_0$ d'émission de celle-ci.

3. Dispositif selon la revendication 1, caractérisé en ce que les moyens de calcul (45) comprennent des moyens (450) pour mémoriser les angles de gisement $\theta_i$ et de largeur angulaire $\delta\theta_i$ de chaque voie et délivrer ces angles sous la commande des signaux $S_i$, et des circuits de calcul (44, $M_1$, $M_2$, $M_3$, 401-403) pour calculer à partir de ces angles, de la fréquence d'émission $f_0$ du sonar et de la vitesse du son c, le décalage Doppler $\Delta f$ au centre de la voie et la bande $\delta f$ selon les formules $\Delta f = K \cos\theta_i$ et $\delta f = 2K (\sin \frac{\delta\theta_i}{2}) \sin\theta_i$ avec $K = 2f_0 \frac{v}{c}$.

4. Dispositif selon la revendication 2, caractérisé en ce que les moyens de calcul (45) comprennent des moyens (450) pour mémoriser les

angles de gisement $\theta_i$ et de largeur angulaire $\delta\theta_i$ de chaque voie et délivrer ces angles sous la commande des signaux $S_i$, et des circuits (451-473) pour calculer à partir de ces angles, des mesures v, Z, H, $\alpha$, T et $t_0$, de la fréquence $f_0$ d'émission du sonar et de la vitesse du son c, les paramètres $P_1 = \cos(\theta_i + \frac{\delta\theta_i}{2})\cos(S_R - \alpha + \frac{\delta S}{2})$ et $P_2 = \cos(\theta_i - \frac{\delta\theta_i}{2})\cos(S_R - \alpha - \frac{\delta S}{2})$, ces paramètres étant calculés simultanément pour l'immersion H avec $S_R = \text{arc sin} \frac{H}{2}$ et $\delta S = \text{tg } S_R \times \frac{cT}{2r}$ et pour la distance au fond Z avec $S = \text{arc sin} \frac{Z}{2}$ et $\delta S = \text{tg } S_R \times \frac{cT}{2r}$ et avec $r = \frac{t-t_0}{2}$) des circuits (474) pour comparer les paramètres relatifs à l'immersion aux paramètres relatifs à la distance au fond et délivrer ceux qui donnent la meilleure réjection, des circuits (475-479) pour calculer le décalage Doppler $\Delta f = \frac{K}{2}(P_1 + P_2)$ au centre de la voie et la demi-bande $f_c = \frac{K}{2}(P_1 - P_2)$ avec $K = 2f_0 \frac{v}{c}$.

5. Dispositif selon l'une quelconque des revendications 3 ou 4, caractérisé en ce que les moyens de filtrage comprennent des moyens de démodulation (43, 421, 422) synchrones en quadrature sur la fréquence centrale de la voie, commandés par le décalage Doppler $\Delta f$, et des filtres (441, 442) passe-haut pour filtrer les signaux ainsi démodulés à une fréquence de coupure déterminée par la demi-bande $f_c$.

6. Dispositif selon la revendication 4, caractérisé en ce que les moyens de calcul (45) comprennent des circuits pour calculer les fréquences $f_{min} = f_0 + K P_1$ et $f_{max} = f_0 + K P_2$ qui encadrent les fréquences à éliminer, et que les moyens de filtrage comprennent des moyens de calcul (50-53) qui délivrent des ensembles de raies spectrales représentant la transformée de Fourier des signaux de voies, des moyens de conversion (55) de $f_{min}$ et $f_{max}$ en numéros de raies, et des moyens de détection (54) qui permettent d'éliminer à partir des numéros de raies les raies spectrales correspondant aux fréquences à éliminer.

7. Dispositif selon la revendication 2, caractérisé en ce que les moyens de calcul (45) comprennent une mémoire contenant des numéros de raies spectrales correspondant aux fréquences à éliminer calculés pour chaque voie et pour des ensembles des valeurs des paramètres, H, Z, $\alpha$ et $t_j$, cette mémoire étant lue aux adresses déterminées par le signal $S_i$ et les valeurs de ces paramètres, et que les moyens de filtrage comprennent des moyens de calcul (50-53) de la transformée de Fourier des signaux de voies délivrant des ensembles de raies spectrales, et des moyens de détection (54) qui permettent d'éliminer les raies spectrales dont les numéros sont lus dans les moyens de calcul (45).

8. Dispositif selon l'une quelconque des revendications 1 à 7, caractérisé en ce que les signaux de voie $B_i$ sont appliqués à un circuit de numérisation et de multiplexage (50) et que les moyens de filtrage et de calcul sont composés d'un microprocesseur (500) qui reçoit le signal de sortie du circuit de multiplexage et les valeurs des paramètres pour accomplir le traitement de ces circuits de filtrage et de calcul.

FIG.1

FIG.2

FIG.3

# FIG.4

0093057

# FIG.6

| voie | : $V_i$ |
| instant | : $t_j$ |
| assiette | : $\alpha$ |
| immersion | : H |

# FIG.7

# FIG.8

FIG.5

FIG.9

0093057

Office européen
des brevets

# RAPPORT DE RECHERCHE EUROPEENNE

EP  83 40 0807

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| Y | FR-A-2 301 020  (HUGHES AIRCRAFT) <br> * Figures 1-6,16,17; page 6, ligne 6 - page 21, ligne 20; page 31, ligne 30 - page 35, ligne 1 * <br> --- | 1,3,5 | G 01 S  15/52 |
| Y | GB-A-1 394 985  (THE PLESSEY COMP.) <br> * Figures 1-4; page 1, ligne 9 - page 4, ligne 28 * <br> --- | 1,3,5 | |
| Y | US-A-3 775 768  (H.H. LISLE et al.) <br> * Figures 1,2; colonne 1, ligne 9 - colonne 4, ligne 55 * <br> --- | 1,3,5 | |
| A | FR-A-2 364 468  (THOMSON-CSF) <br> * Figure 1; page 1, ligne 1 - page 2, ligne 18 * <br> --- | 1 | |
| A,D | US-A-3 723 954  (A. NELKIN et al.) <br> --- | | |
| A | DE-A-2 418 785  (SIEMENS) <br><br> ----- | | |

**DOMAINES TECHNIQUES RECHERCHES (Int. Cl. ³)**

G 01 S

Le présent rapport de recherche a été établi pour toutes les revendications

| Lieu de la recherche | Date d'achèvement de la recherche | Examinateur |
|---|---|---|
| LA HAYE | 20-07-1983 | CANNARD J.M. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

 

& : membre de la même famille, document correspondant

OEB Form 1503. 03.82